# EUROPEAN PATENT SPECIFICATION

(11) **EP 0 264 525 B1**
(45) Date of publication and mention of the grant of the patent: **02.06.1993**
(21) Application number: 87103676.0
(22) Date of filing: 13.03.1987
(51) Int. Cl.: G01S 13/52, G01S 7/06

(54) **A digital signal processor for search radar systems with moving target indication**
Digitale Signalverarbeitungsschaltung für Überwachungsradarsysteme mit Anzeige von bewegten Zielen
Circuit de traitement numérique de signaux pour radar de surveillance avec indication de cibles mobiles

(30) Priority: 21.10.1986 IT 2206786
(43) Date of publication of application: 27.04.1988
(73) Proprietor: CONTRAVES ITALIANA S.p.A., I-00131 Roma (IT)
(72) Inventor: Piermattei, Paolo, Rome (IT); Di Berardino, Alessandro, I-00156 Rome (IT)
(74) Representative: Forattini, Amelia

(56) References cited:
- DE-A- 3 002 148
- DE-B- 1 157 676
- FR-A- 2 566 919
- US-A- 3 745 571
- ELEKTROTECHNIK UND MASCHINENBAU, vol. 97, no. 1, January 1980, pages 24-27, Vienna, AT; G. MÜCK: "Die neue L-Band-Radaranlage zur Streckenkontrolle in der Flugsicherung"
- THE MARCONI REVIEW, vol. XLIII, no. 216, first quarter 1980, pages 1-13, Marconi Co., Ltd, Chelmsford, Essex, GB; E.A. JONES: "A high speed radar digital recording system"

## Description

This invention relates to a digital signal processor for search radar systems, and has a special application in video signal processing in pulse-doppler search and discovery radar systems, having a coherent receiver and a detector for moving-target indication (MTI). Such apparatus is well known to those skilled in the art.

A modern radar of the above kind is required to have a sophisticated processing system that is able to deliver highly credible output data, having a high information content. In other words, the false alarm rate, due to thermal noise and to undesired clutter echoes (stationary parasite echoes) should be very low, so that the operator is not unduly alarmed, and the automatic apparatus which process the radar outputs and automatically generate actions in reply to them are not drawn into error. Moreover, a modern radar processing system is required to extract from the video signals further information about the target, in addition to its coordinates, which, as is well known to those skilled in the art, comprise azimuth, distance and possibly elevation. Such additional information might be, for instance, the radial speed and the kind of target, whether with fixed or with pivoting wings, or even a more detailed classification, broken down by classes and subclasses, based on statistical data concerning the targets themselves, as stored previously in the signal processor. The state of the art prior to this invention could provide such performance only by massive use of techniques of signal processing such as the discrete Fourier transform (or fast Fourier transform) and in-line correlation.

Using such techniques on a considerable amount of data, i. e. on all the radar resolution cells, which typically are tens of thousands or even hundreds of thousands per antenna revolution, entails a considerable increase of the amount of hardware needed. Moreover, while such increase of the amount of hardware has been partly made up for by the simultaneous development of devices integrated on a larger and larger scale, in any case the cost of radar signal processors has continued to increase.

It is also known, according to Elektrotechnik und Maschinenbau, vol.97, N. 1, January 1980, pages 24-27; G. Mück: "Die neue L-Band-Radaranlage zur Streckenkontrolle in der Flugsicherung, to use a processor which comprises two digital processing chains connected in parallel:
a) an MTI chain which operates on all the radar cells and implicitly contains an MTI filter followed by a detector;
b) a Normal-Log chain including a CFAR circuit which only operates on a few selectable cells, namely those where weather clutter is present.

It is the object of this invention as defined in claim 1 to provide a digital signal processor for radar systems of the above kind, in which the amount of the overall signal processing is reduced, while still obtaining the performance required from a modern search and discovery radar, such as mentioned above.

Such object is achieved by the present invention by means of a digital signal processor for radar systems of the above kind, wherein two parallel, digital processing chains are provided, respectively comprising:
a) a first chain operating in-line on all the radar resolution cells, and comprising an MTI filter and a detector connected in cascade;
b) a second chain operating off-line only on a few selectable cells, and comprising a memory section for storing all samples of the radar video signal at the input of the signal processor, and a calculus section in cascade to the memory section for a special-purpose processing only of that data in the memory section that have been selected.

The advantages of this processor system over conventional ones, where all radar cells are similarly processed, are a saving in the amount of hardware to a size and cost comparable to radar processors having conventional performance while obtaining a performance that is typical of more sophisticated radar processors.

The above and other objects, advantages and features of the invention will be apparent from a consideration of the following specification, given with reference to the attached drawings, wherein:
Fig. 1 is a general block diagram of a radar system comprising a signal processor according to the invention; and
Fig. 2 is a more detailed block diagram of the signal processor of Fig. 1.

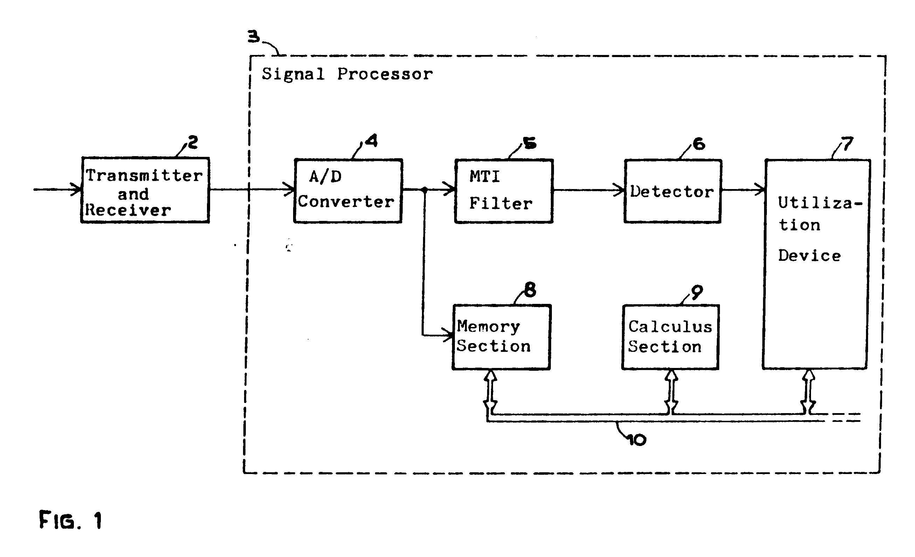

With reference to Fig. 1, a special-purpose processing chain including a memory section 8 and a calculus section 9 is connected in parallel to a conventional MTI processing chain including an MTI filter 5 and a detector 6.

While the MTI chain, which is a conventional chain, easy to implement with modern electronic devices, processes the echoes of all radar resolution cells (typically tens of thousands or hundreds of thousands pe antenna revolution), the calculus section 9 of the special-purpose processing chain only processes the echoes of the radar cells where the MTI processing has revealed the existence of a target. Therefore, the processing in the calculus section is limited to a few radar cells (typically a few units or a few tens per antenna revolution), for which it is possible to provide even highly sophisticated logics with a very limited amount of hardware, due to the reduced amount of data requiring processing (typically one thousandth of the data at the input of the signal processor).

A preferred embodiment of the invention will now be described in more detail.

With further reference to Fig. 1, radar video signals, which are in-phase and quadrature, coherent signals, are fed by a transceiver unit 2 to a signal processor 3. They are converted fron analog to digital in A/D converter unit 4, and the digital signals are then applied to MTI filter 5 for clutter elimination. The digital signals are also applied to memory section 8, which stores them and keeps them available for further processing. The outputs of MTI filter 5 are processed by detector 6 to detect the existence of any targets and to pass the information to a utilization device 7, which is a calculus and memory unit. As set forth below in more detail, for each target of interest for further, more sophisticated processing, the utilization device 7 automatically requests the corresponding video samples from memory section 8, where they were previously stored, through a bidirectional channel 10, which is used for exchanging digital information among several sub-units within signal processor 3. From memory section 8, the digital video samples corresponding to the detected targets are transferred, through channel 10, to calculus section 9, where the more sophisticated processing logic is performed, for different purposes and using means well known to those skilled in the art of radar signal processing. Finally, the additional information extracted from the radar echoes goes from calculus section 9, through channel 10, to utilization device 7, where it is added to the basic information about the detected targets, comprising the coordinates of their positions.

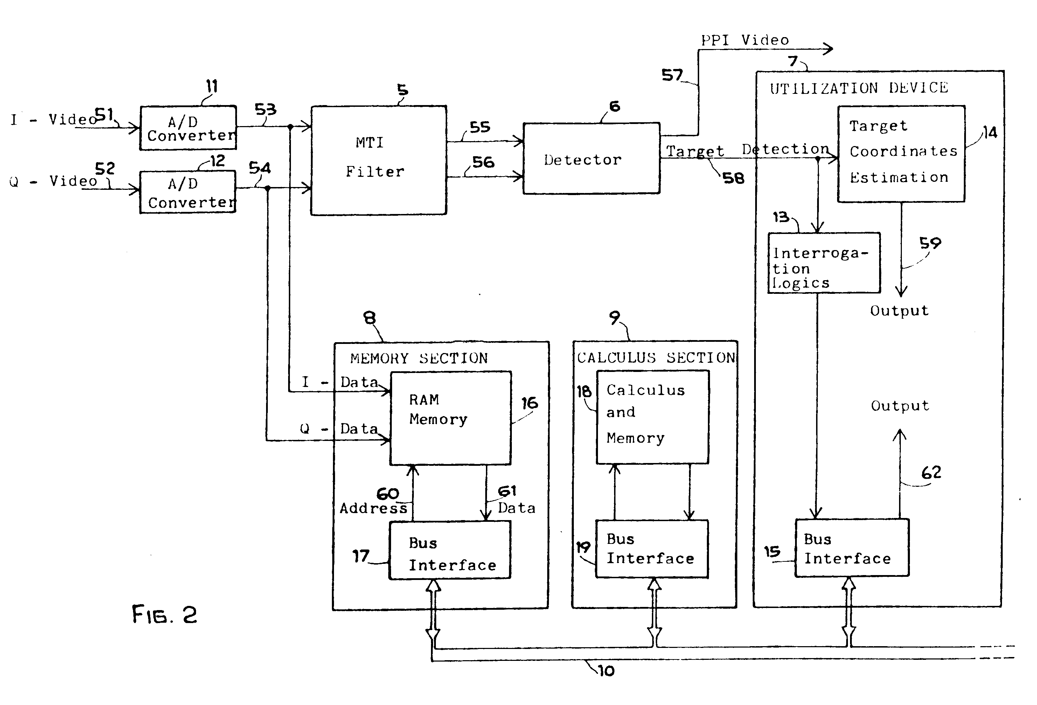

Fig. 2 shows in more detail certain portions of the circuit arrangement of the invention. Since the output video signal of a modern radar is a coherent, two-channel signal, comprising two components, in-phase 51 and quadrature 52, respectively, a pair of A/D converters 11 and 12 is required for transforming the signal from anlaog to digital, and MTI filter 5 is also two-channel.

The MTI filter 5 may be of any type known in literature, without affecting the substance of the invention.

The two in-phase and quadrature components I and Q are combined in a detector 6, which may be linear or quadratic, without affecting the substance of the invention, and the result of such combining is integrated with well known means (not shown) over a predetermined number of samples, and compared, also with known means, to a threshold that is predetermined or adaptively computed within the detector itself.

The outputs of detector 6 are the plan position indication (PPI) 57 and the target-detection information 58. The latter is processed in the utilization device 7, both by the target coordinate evaluation logic 14, which correlates, in a way known per se, the data from contiguous radar cells and evaluates the coordinates of the target, and by the interrogation logic 13, which prepares, with known means and in suitable format, the requests to memory section 8 for further processing of the radar video samples. Such requests are trasmitted to a random-access memory 16 through channel interface 15, channel 10 and finally channel interface 17, which decodes the requests and sends to random-access memory 16 the addresses 60 pertaining to the data, among the information stored, that belongs to the radar video samples of interest. In practice, the memory section 8, together with interrogation logic 13, introduce a delay and a selection for video data from the radar cells where the targets are. The data 61 thus selected are trasnmitted from the memory section 8 to the calculus section 9, via the channel interface 17, channel 10 and channel interface 19, down to the memory and calculus section 18, where they are subjected to specialized processing as Known, for the extraction of further information about the target.

Such sophisticated processing can be of different kinds (Fourier transform, correlation, statistical estimates, etc.) and is resident in the programmed logic of the memory andl calculus means in the memory and calculus section 18; however, such processing does not affect the substance of the invention. Any further information concerning the targets, as generated by such processing, is sent to utilization device through channel interface 19, channel 10 and channel interface 15.

In utilization device 7, special information 62 is used, together with target coordinates 59, for purposes well known to persons skilled in the art.

## Claims

1. An electronic digital signal processor for a pulse-doppler, search radar system, comprising two digital processing chains connected in parallel, respectively comprising:
a) a first chain operating in-line on all the radar resolution cells, and having an MTI filter (5) and a detector (6) connected in cascade;
b) a second chain operating off-line only on a few selectable cells, and having a memory section (8) for storing all samples of the radar video signal at the input of the signal processor, and a calculus section (9) in cascade to the memory section for special-purpose processing only of that data in the memory section that has been selected, characterized in that the
outputs of both processing chains (5, 6; 8, 9) are connected to a utilization device (7) having calculus and memory means for combining the information extracted from the first processing chain with the information coming from the second processing chain.
and in that the
radar cells processed by the second processing chain are adaptively selectable under control of logic means (13) in the calculus and memory means of said utilization device, based on the target indication delivered by the first processing chain.

## Patentansprüche

1. Elektronischer Digitalsignal-Prozessor für ein Impuls-Doppler-Suchradar-System mit zwei parallel geschalteten Verarbeitungsketten, nämlich
a) einer ersten Kette, die mitlaufend alle Radar-Auflösungs-Elemente verarbeitet und in Kaskade geschaltet ein MTI-Filter (5) und einen Detektor (6) aufweist, und
b) einer zweiten Kette, die unabhängig nur einige auswählbare Elemente verarbeitet und einen Speicherabschnitt (8) zum Speichern aller Proben des am Eingang des Signalprozessors erscheinenden Radar-Videosignals und einen mit dem Speicherabschnitt in Kaskade geschalteten Rechnerabschnitt (9) zur speziellen Verarbeitung derjenigen Daten im Speicherabschnitt, die ausgewählt wurden, aufweist,
dadurch gekennzeichnet, daß die Ausgänge der beiden Verarbeitungsketten (5, 6; 8, 9) an eine Verwertungseinrichtung (7) angeschlossen sind, die Rechner- und Speichereinrichtungen zur Kombination der aus der ersten Verarbeitungskette kommenden Information mit der aus der zweiten Verarbeitungskette kommenden Information aufweist, und daß die von der zweiten Verarbeitungskette verarbeiteten Radar-Elemente unter der Steuerung Von Logik-Einrichtungen (13) der Rechner- und Speicher-Einrichtungen der Verwertungseinrichtung und auf der Grundlage der von der ersten Verarbeitungskette gelieferten Ziel-Anzeige adaptiv auswählbar sind.

## Revendications

1. Processeur électronique de signaux numériques pour un système radar de recherche, doppler à impulsions, comprenant deux chaînes de traitement numérique connectées en parallèle, comportant respectivement :
a) une première chaîne fonctionnant en ligne sur toutes les cellules de résolution radar, et dans laquelle un filtre MTI (Eliminateur d'Images Parasites) (5) et un détecteur (6) sont connectés en cascade ;
b) une seconde ligne fonctionnant en différé uniquement sur quelques cellules que l'on peut sélectionner, et comportant une section de mémoire (8) pour stocker tous les échantillons du signal vidéo radar à l'entrée du processeur de signaux, et une section de calcul (9) en cascade avec la section de mémoire pour un traitement d'application spéciale uniquement sur des données de la section de mémoire qui a été sélectionnée, caractérisé en ce que les sorties des deux chaînes de traitement (5, 6 ; 8, 9) sont connectées à un dispositif d'utilisation (7) comportant des moyens de calcul et de mémoire pour combiner les informations extraites de la première chaîne de traitement avec les informations provenant de la seconde chaîne de traitement, et en ce que les cellules radar traitées par la seconde chaîne de traitement peuvent être sélectionnées sous la commande de moyens logiques (13) faisant partie des moyens de calcul et de mémoire dudit dispositif d'utilisation, d'après l'indication de cible délivrée par la première chaîne de traitement.
